# EUROPÄISCHE PATENTSCHRIFT

(11) **EP 3 022 430 B1**
(45) Veröffentlichungstag und Bekanntmachung des Hinweises auf die Patenterteilung: **10.01.2018**
(21) Anmeldenummer: 14725472.6
(22) Anmeldetag: 22.05.2014
(51) Int. Cl.: B01D 46/00, F02M 35/02, B29C 45/26, F02M 35/024, B01D 46/24, B29L 23/00, B29C 45/33, B29C 45/37

(54) **STÜTZROHR, FILTERELEMENT UND FILTERSYSTEM MIT EINEM STÜTZROHR SOWIE VERFAHREN UND VORRICHTUNG ZUR HERSTELLUNG DES STÜTZROHRS**
SUPPORT TUBE, FILTER ELEMENT AND FILTER SYSTEM HAVING A SUPPORT TUBE, AND METHOD AND DEVICE FOR PRODUCING THE SUPPORT TUBE
TUBE DE SUPPORT, ÉLÉMENT FILTRE ET SYSTÈME DE FILTRATION POURVU D'UN TUBE DE SUPPORT, AINSI QUE PROCÉDÉ ET DISPOSITIF PERMETTANT DE PRODUIRE LE TUBE SUPPORT

(30) Priorität: 18.07.2013 DE 102013012013
(43) Veröffentlichungstag der Anmeldung: 25.05.2016
(73) Patentinhaber: MANN+HUMMEL GmbH, 71636 Ludwigsburg (DE)
(72) Erfinder: NEEF, Pascal, 71229 Leonberg (DE); POLJAK, Ivanka, 41261 Göteborg (SE); HEIM, Michael, Charlotte, North Carolina 28277 (US); BECK, Andreas, 74366 Kirchheim a. N. (DE); SLUGECIC, Manuel, 70376 Stuttgart (DE)
(86) Internationale Anmeldenummer: PCT/EP2014/060506
(87) Internationale Veröffentlichungsnummer: WO 2015/007421

(56) Entgegenhaltungen:
- EP-A1- 0 846 546
- EP-A1- 1 481 715
- CH-A2- 701 890
- DE-A1- 4 416 577
- DE-A1-102010 042 424
- DE-A1-102011 018 366
- FR-A1- 2 401 007
- GB-A- 1 345 155

## Beschreibung

### Technisches Gebiet

Die Erfindung betrifft ein Stützrohr aus Kunststoff für ein Filterelement, mit mehreren Durchgangsausnehmungen, wobei das Stützrohr einteilig ausgebildet ist und die Durchgangsausnehmungen durch mehr als vier, im Querschnitt mehreckige, zumindest abschnittsweise in Längsrichtung des Stützrohrs ausgebildete Längsstege begrenzt werden. Die Erfindung betrifft weiterhin ein Filterelement und ein Filtersystem mit einem solchen Stützrohr sowie ein Verfahren und eine Vorrichtung zu dessen Herstellung.

### Stand der Technik

Es ist seit langer Zeit bekannt, Stützrohre aus Kunststoff in Filterelementen, insbesondere in Filterelementen für Kraftfahrzeuge, vorzusehen. Derlei Stützrohre werden auch als sogenannte Mittelrohre bezeichnet und sind beispielsweise aus der DE 10 2011 018 366 A1 bekannt geworden. Die Stützrohre dienen zur Halterung bzw. Abstützung eines Filtermediums und werden zumindest teilweise von dem zu filternden Fluid bzw. von dem gefilterten Fluid, insbesondere von Luft, durchströmt. Hierzu weisen die Stützrohre Durchlässe auf, die durch Längsstege voneinander getrennt sind.

Bei größeren Bauformen der Stützrohre, wie diese etwa bei Filterelementen für Lastkraftwagen eingesetzt werden, hat es sich aus Stabilitätsgründen als vorteilhaft erwiesen, das Stützrohr mit mehr als vier Längsstegen auszubilden. Ein Stützrohr mit einer Vielzahl an Längsstegen und Durchlässen ist aus der EP 1 481 715 A1 bekannt geworden. Das bekannte Stützrohr besteht aus mehreren, korbförmig ausgebildeten, ineinander gestapelten Stützrohrelementen. Eine solche Vielzahl von Stützrohrelementen vorzusehen, ist jedoch verhältnismäßig aufwändig und dadurch teuer in der Herstellung und Montage. Dabei ist in Bezug auf die Produktionskosten zu bedenken, dass es sich bei den in Rede stehenden Stützrohren um einen Massenartikel handelt, bei dem sich bereits kleinere Verbesserungen bei der Herstellung eines einzelnen Stützrohres signifikant auf die gesamten Produktionskosten auswirken.

Es hat sich daher als vorteilhaft herausgestellt, die Stützrohre einteilig auszubilden. Ein solches einteiliges Stützrohr wird in der DE 10 2005 040 623 A1 offenbart. Die Längsstege dieses bekannten Stützrohrs sind im Querschnitt rund ausgebildet. Allerdings kann das Stützrohr noch einfacher und somit kostengünstiger gefertigt werden, wenn die Längsstege einen mehreckigen Querschnitt aufweisen.

Weitere Stützrohre sind beispielsweise aus GB 1 345 155 A oder DE 10 2010 042 424 A1 bekannt.

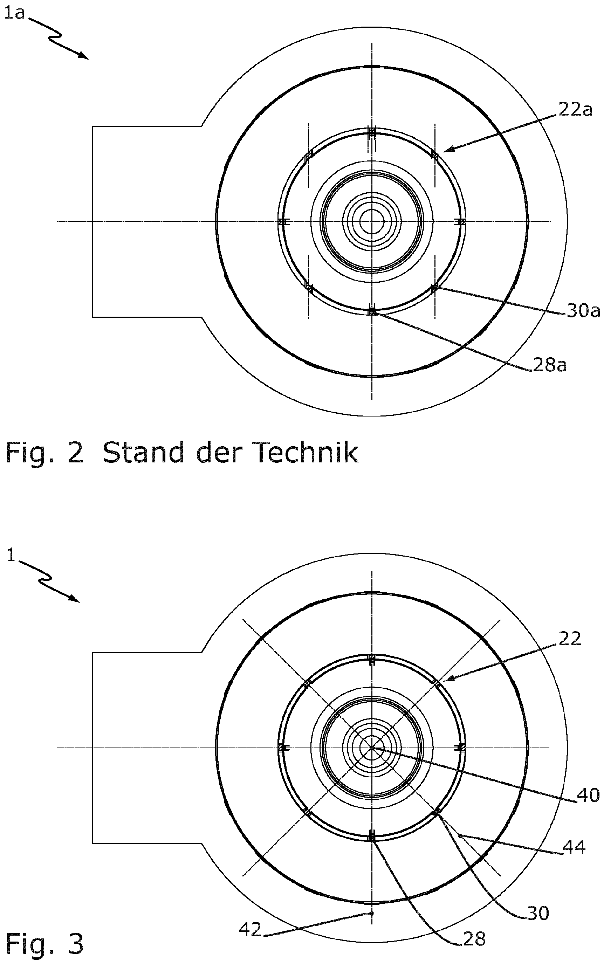

Derlei Stützrohre werden bereits von der Anmelderin gefertigt. Fig. 2 - die nachstehend erläutert wird - zeigt ein solches bekanntes Stützrohr im Querschnitt. Das Stützrohr wird im Kunststoff-Spritzgussverfahren hergestellt und weist aufgrund des zur Herstellung des Stützrohrs eingesetzten Formwerkzeuges sowie einer erleichterten Ausformung des Stützrohrs Längsstege mit unterschiedlicher Form und unterschiedlichem Querschnitt auf. Filterelemente mit solchen Stützrohren werden in Filtersystemen, beispielsweise in Luftfiltersystemen bei Lastkraftwagen oder Baufahrzeugen, eingesetzt und können üblicher Weise mit einer frei wählbaren bzw. sich zufällig ergebende Drehlage um ihre Längsachse im Gehäuse des Filtersystems eingesetzt werden. Die Filtersysteme weisen häufig einen Fluidsensor zur Bestimmung des gefilterten Fluidstroms auf. In Abhängigkeit von der jeweiligen Drehlage des Filterelements und damit der Drehlage des Stützrohres im Gehäuse des Filtersystems kann es bei den Filterelementen mit den bekannten Stützrohren je nach Anströmung der Längsstege zu unterschiedlich starken Ablenkungen bzw. Umlenkungen des Fluidstroms im Filterelement kommen. Dadurch wird der Fluidstrom an der Messstelle des Fluidsensors in nicht vorhersehbarer Weise beeinflusst.

### Offenbarung der Erfindung

Der Erfindung liegt daher die Aufgabe zugrunde, ein Stützrohr bereitzustellen, das sowohl einen reproduzierbareren Fluidstrom ermöglicht als auch einfach und kostengünstig gefertigt werden kann.

Diese Aufgabe wird erfindungsgemäß durch ein Stützrohr aus Kunststoff für ein Filtersystem gelöst, wobei das Stützrohr mehrere von einer Vielzahl von Querstegen und Längsstegen begrenzte Durchgangsausnehmungen aufweist und einteilig ausgebildet ist und die Durchgangsausnehmungen durch mehr als vier, im Querschnitt mehreckige, zumindest abschnittsweise in Längsrichtung des Stützrohrs ausgebildete Längsstege begrenzt werden, wobei die Längsstege jeweils symmetrisch zu ihrer in Längsrichtung des Stützrohrs verlaufenden, die mittige Längsachse des Stützrohrs schneidenden Mittenebene ausgebildet sind.

Die Längsstege sind somit im Querschnitt bzw. zumindest hinsichtlich ihrer einander gegenüberliegenden Seitenflanken zur Mitte des Stützrohrs hin symmetrisch ausgebildet. Der Fluidstrom kann dadurch die Längsstege gleichmäßig umströmen. Die mehreckige Ausbildung der Längsstege ermöglicht eine kostengünstige Produktion. Gleichzeitig ist durch die Anzahl der Längsstege die Stabilität des Stützrohrs gewahrt. Insbesondere sind alle Längsstege bzgl. ihrer Mittenebne symmetrisch ausgebildet.

Das Stützrohr kann im Querschnitt eine beliebige Form aufweisen. Beispielsweise kann das Stützrohr einen im Wesentlichen ovalen oder mehreckigen Querschnitt aufweisen. Eine besonders gleichmäßige Durchströmung des Stützrohrs und somit eine besonders präzise Messung des Fluidstroms kann jedoch dadurch erreicht werden, dass das Stützrohr einen runden Querschnitt aufweist, das heißt radialsymmetrisch zu seiner mittigen Längsachse ausgebildet ist.

Vorzugsweise sind die Längsstege rotationssymmetrisch zur mittigen Längsachse des Stützrohrs ausgebildet, um ein gleichmäßiges Anströmen des Stützrohrs von allen Außenseiten zu ermöglichen.

In besonders bevorzugter Ausgestaltung der Erfindung weisen alle Längsstege den gleichen Querschnitt auf. Hierdurch ist der Strömungswiderstand aller Längsstege identisch, wodurch unterschiedliche Umlenkungen des Fluidstroms je nach Drehlage des Stützrohres reduziert bzw. vermieden werden können.

Eine konstruktiv besonders einfache Herstellung des Stützrohrs kann dadurch erzielt werden, dass zumindest ein Längssteg, insbesondere alle Längsstege, einen viereckigen Querschnitt aufweisen. Zumindest ein Längssteg, insbesondere alle Längsstege, können dabei einen rechteckigen oder trapezförmigen Querschnitt aufweisen. Ein trapezförmiger Querschnitt wird dabei dann besonders bevorzugt, wenn gedachte Verlängerungen der Seitenflanken des Längsstegs außerhalb des Stützrohres die - die mittige Längsachse des Stützrohres schneidende - Mittenebene schneiden. Mit anderen Worten kann zumindest ein Längssteg, vorzugsweise alle Längsstege, mit nach außen schmaler werdenden Seitenflanken ausgebildet sein. Hierdurch kann das Stützrohr beim Spritzgießprozess wesentlich leichter entformt werden.

Die erfindungsgemäße Aufgabe wird weiterhin gelöst durch ein Filterelement mit einem zuvor beschriebenen Stützrohr und mit einem, vorzugsweise ringförmigen, Filtermedium, das an den Längsstegen des Stützrohrs außenseitig anliegt und in radialer Richtung abgestützt ist. Das Filtermedium kann dabei - um eine große Oberfläche zur Verfügung zu stellen - mehrfach gefaltet an der Außenseite des Stützrohrs anliegen. Es versteht sich, dass das Filterelement in bekannter Weise mit beidseitigen Endplatten versehen sein kann.

Die erfindungsgemäße Aufgabe wird weiterhin gelöst durch ein Filtersystem mit einem Gehäuse, in dem ein zuvor beschriebenes Filterelement angeordnet ist, wobei das Gehäuse einen Fluideinlass aufweist, der fluidisch mit der Außenseite des Filtermediums verbunden ist und das Gehäuse einen Fluidauslass aufweist, der fluidisch mit der Innenseite des Stützrohrs verbunden ist, wobei zwischen dem Stützrohr und dem Fluidauslass ein Fluidsensor, insbesondere ein Fluidmassensensor, zur Messung des Fluidstroms aus dem Gehäuse angeordnet ist. Der verschmutzte Fluidstrom wird dabei vom Fluideinlass des Gehäuses auf die Außenseite des Filtermediums und weiter radial ins Innere des Stützrohrs geleitet, von wo aus das nun gereinigte Fluid axial aus dem Stützrohr zu einem Fluidauslass des Gehäuses herausgeleitet wird. Vor dem Fluidauslass kann ein Fluidsensor angeordnet sein, der pro Zeiteinheit zumindest einen Teil der Fluidmenge misst, die aus dem Fluidauslass herausströmt. Anhand dieser Messung kann dann die aus dem Fluidauslass strömende Fluidmenge pro Zeit unmittelbar bestimmt oder extrapoliert werden. Bei dem erfindungsgemäßen Filtersystem hat die jeweilige Drehlage des Filterelements bzw. des im Filterelement verbauten Stützrohrs relativ zum Fluideinlass einen weniger verfälschenden Effekt auf die Fluidstrommessung als dies bei herkömmlichen Filtersystemen der Fall ist.

Insbesondere handelt es sich bei dem erfindungsgemäßen Filterelement und Filtersystem um ein Filterelement bzw. Filtersystem, welches zur Filtration von Ansaugluft einer Brennkraftmaschine eines Kraftfahrzeuges dient.

Die erfindungsgemäße Aufgabe wird weiterhin gelöst durch eine Vorrichtung zur Spritzgussherstellung eines zuvor beschriebenen Stützrohrs, wobei die Vorrichtung einen, insbesondere zylinderförmigen, Dorn aufweist, dessen Außenseite die Innenseite des Stützrohrs bei dessen Herstellung begrenzt, wobei die Vorrichtung zumindest drei um den Dorn anordenbare Außenelemente (auch Werkzeugformteile genannt) aufweist und ein, insbesondere thermoplastischer, Kunststoff in zur Ausbildung der Längsstege des Stützrohrs vorgesehene Leerräume der Vorrichtung zwischen den Dorn und die Außenelemente einbringbar ist, wobei die Leerräume symmetrisch zu ihrer in Längsrichtung des Dorns verlaufenden, die mittige Längsachse des Dorns schneidenden Mittenebene ausgebildet sind.

Die erfindungsgemäße Vorrichtung zur Herstellung des Stützrohrs umfasst somit zumindest vier Elemente: Einen Dorn, der auch mehrteilig ausgebildet sein kann und die Innenseite des Stützrohrs begrenzt sowie zumindest drei Außenelemente, die die Außenseite des Stützrohrs begrenzen. Dorn und Außenelemente berühren sich in dem Bereich, in dem die Durchlässe des Stützrohrs ausgebildet werden. Zwischen dem Dorn und den Außenelementen sind Leerräume bzw. Hohlräume vorgesehen, in die Kunststoff einspritzbar ist, um die Längsstege des Stützrohrs auszubilden, wobei die Längsstege die Form der Leerräume aufweisen. Um eine spätere drehlagenabhängige Umlenkung des Fluidstroms um die Längsstege zu reduzieren bzw. zu vermeiden, sind die Leerräume derart ausgebildet, dass die Längsstege jeweils symmetrisch zu ihrer in Längsrichtung des Stützrohrs verlaufenden, die mittige Längsachse des Stützrohrs schneidenden Mittenebene ausgebildet werden.

Die Außenelemente können nach dem Aushärten des Kunststoffs in der Vorrichtung besonders leicht von dem Stützrohr entfernt werden, wenn in zumindest einem Bereich zwischen zwei Außenelementen und dem Dorn, insbesondere in allen Bereichen zwischen zwei Außenelementen und dem Dorn, ein Leerraum für einen Längssteg vorgesehen ist. Die Außenelemente können dadurch von beiden Seiten der Längsstege abgehoben werden.

Die Vorrichtung zur Ausbildung eines Stützrohrs ist vorzugsweise mit mehr als vier Leerräumen ausgebildet, wobei erfindungsgemäß für s Längsstege a=s/2 Außenelemente an der Vorrichtung vorgesehen sind und a eine aufgerundete ganze Zahl ist. Soll beispielsweise ein Stützrohr mit s=8 Längsstegen gefertigt werden, so sind hierfür a=s/2=8/2=4 Außenelemente vorgesehen. Soll demgegenüber ein Stützrohr mit s=13 Längsstegen gefertigt werden, so sind hierfür a=s/2=13/2=6,5=7 Außenelemente vorgesehen. Hierdurch wird die Anzahl der Außenelemente für die Herstellung des Stützrohrs klein gehalten. Die Vorrichtung kann so konstruktiv besonders einfach ausgebildet werden. Die hohe Anzahl an Leerräumen und die daraus resultierende hohe Anzahl an Längsstegen ermöglicht die Herstellung eines mechanisch stabilen Stützrohrs.

Die Leerräume sind, um eine kostengünstige Produktion zu ermöglichen, vorzugsweise mehreckig ausgebildet. Besonders bevorzugt sind die Leerräume im Querschnitt trapezförmig ausgebildet, wobei die Seitenflanken des Leerraumes vom Dorn weg aufeinander zu laufen, das heißt die Querschnitt der Leerräume nach außen hin schmaler werdend ausgebildet sind. Derlei Leerräume sind sowohl einfach zu fertigen als auch leicht von dem entstandenen Stützrohr abtrennbar.

Der Dorn kann im Querschnitt eine beliebige Form aufweisen. Beispielsweise kann der Dorn einen im Wesentlichen ovalen oder mehreckigen Querschnitt aufweisen. Eine besonders gleichmäßige Durchströmung des Stützrohrs und somit eine besonders präzise Messung des Fluidstroms sowie eine konstruktiv einfache Fertigung des Stützrohrs kann jedoch dadurch erreicht werden, dass der Dorn einen runden Querschnitt aufweist, das heißt radialsymmetrisch zu seiner mittigen Längsachse ausgebildet ist.

Vorzugsweise sind die Leerräume rotationssymmetrisch zur mittigen Längsachse des Dorns ausgebildet, um ein gleichmäßiges Anströmen der Längsstege des Stützrohrs von all seinen Außenseiten sowie ein leichtes Entformen des Stützrohrs aus der Vorrichtung zu ermöglichen.

In besonders bevorzugter Ausgestaltung der Erfindung weisen alle Leerräume den gleichen Querschnitt auf. Hierdurch ist der Strömungswiderstand aller in den Leerräumen gebildeten Längsstege identisch, wodurch drehlagenabhängige Umlenkungen des Fluids effektiv vermieden werden können.

Eine konstruktiv besonders einfache Herstellung des Stützrohrs kann dadurch erzielt werden, dass zumindest ein Leerraum, insbesondere alle Leerräume, einen viereckigen Querschnitt aufweisen.

Die erfindungsgemäße Aufgabe wird schließlich durch ein Verfahren zur Spritzgussherstellung eines einteiligen Stützrohrs aus Kunststoff für ein Filtersystem mit den nachstehend aufgeführten Schritten gelöst:
a) Bereitstellen eines Dorns;
b) Anpressen von zumindest drei Außenelementen an die Außenseite des Dorns, wobei zumindest abschnittsweise in Längsrichtung des Dorns verlaufende Leerräume zwischen den Außenelementen und dem Dorn entstehen, die jeweils symmetrisch zu ihrer in Längsrichtung des Dorns verlaufenden, die mittige Längsachse des Dorns schneidenden Mittenebene ausgebildet sind;
c) Einbringen von Kunststoff in die Leerräume;
d) Aushärten des Kunststoffs;
e) Beabstanden der Außenelemente von dem Dorn entlang der die mittige Längsachse des Dorns schneidenden Mittenebenen der Leerräume.

Das beschriebene Verfahren wird vorzugsweise unter Einsatz der zuvor beschriebenen Vorrichtung zur Herstellung des zuvor beschriebenen Stützrohrs eingesetzt. Dabei werden die Außenelemente nach dem Aushärten des Kunststoffs radial vom Zentrum des Dorns weg bewegt, um eine Beschädigung des neu geformten Stützrohrs zu vermeiden.

Es wird vorzugsweise eine Vorrichtung zur Ausbildung eines Stützrohrs mit mehr als vier Leerräumen eingesetzt, wobei für s Längsstege a=s/2 Außenelemente an der Vorrichtung vorgesehen sind und a eine aufgerundete ganze Zahl ist.

Verfahrensschritt e) kann dabei besonders reproduzierbar und fehlerfrei durchgeführt werden, wenn in zumindest einem Bereich zwischen zwei Außenelementen und dem Dorn, insbesondere in allen Bereichen zwischen zwei Außenelementen und dem Dorn, ein Leerraum für einen Längssteg vorgesehen ist.

Das Verfahren kann weiterhin sehr kostengünstig durchgeführt werden, wenn die Leerräume im Querschnitt mehreckig, insbesondere nach außen hin schmaler werdend im Querschnitt trapezförmig, ausgebildet sind.

Es kann ein Dorn mit im Querschnitt beliebiger Form eingesetzt werden. Beispielsweise kann ein Dorn mit einem im Wesentlichen ovalen oder mehreckigen Querschnitt verwendet werden. Eine besonders gleichmäßige Durchströmung des gefertigten Stützrohrs kann jedoch dadurch erreicht werden, dass ein Dorn verwendet wird, der einen runden Querschnitt aufweist, das heißt radialsymmetrisch zu seiner mittigen Längsachse ausgebildet ist.

Vorzugsweise werden Leerräume verwendet, die rotationssymmetrisch zur mittigen Längsachse des Dorns ausgebildet sind, um ein gleichmäßiges Anströmen der Längsstege des Stützrohrs von all seinen Außenseiten sowie ein leichtes Entformen des Stützrohrs aus der Vorrichtung zu ermöglichen.

In besonders bevorzugter Ausgestaltung der Erfindung weisen alle verwendeten Leerräume den gleichen Querschnitt auf. Hierdurch ist der Strömungswiderstand aller in den Leerräumen gebildeten Längsstege identisch, wodurch drehlagenabhängige Umlenkungen des Fluids effektiv vermieden werden können.

Zur Fertigung des erfindungsgemäßen Filterelements wird ein in der vorstehend beschriebenen Weise erzeugtes Stützrohr und ein für den jeweiligen Anwendungszweck geeignetes Filtermedium, beispielsweise über zwei Endplatten miteinander verbunden.

### Kurze Beschreibung der Zeichnungen

Weitere Merkmale und Vorteile der Erfindung ergeben sich aus der nachfolgenden detaillierten Beschreibung mehrerer Ausführungsbeispiele der Erfindung, anhand der Figuren der Zeichnung, die erfindungswesentliche Einzelheiten zeigt, sowie aus den Patentansprüchen.

Die in der Zeichnung dargestellten Merkmale sind derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

In der schematischen Zeichnung sind Stand der Technik sowie Ausführungsbeispiele der Erfindung dargestellt und in der nachfolgenden Beschreibung näher erläutert.

Es zeigen:
- Fig. 1: Eine geschnittene Seitenansicht eines erfindungsgemäßen Filtersystems mit einem erfindungsgemäßen Stützrohr;
- Fig. 2: eine geschnittene Draufsicht auf ein Filtersystem gemäß Fig. 1 mit einem Stützrohr gemäß dem Stand der Technik;
- Fig. 3: eine geschnittene Draufsicht auf das Filtersystem gemäß Fig. 1 mit dem erfindungsgemäßen Stützrohr;
- Fig. 4: eine geschnittene Draufsicht auf eine Vorrichtung zur Herstellung des Stützrohrs aus Fig. 2 gemäß dem Stand der Technik; und
- Fig. 5: eine geschnittene Draufsicht auf eine erfindungsgemäße Vorrichtung zur Herstellung des erfindungsgemäßen Stützrohrs gemäß Fig. 1 und Fig. 3.

### Ausführungsformen der Erfindung

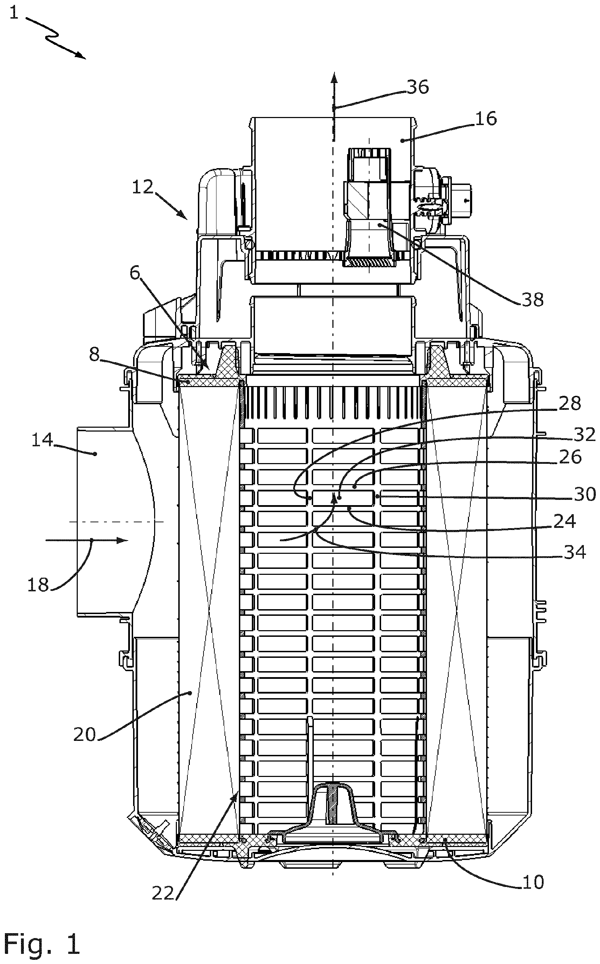

**Fig. 1** zeigt ein erfindungsgemäßes Filtersystem 1, hier ein Luftfiltersystem, mit einem Filterelement 6. Das Filterelement 6 weist eine erste Endplatte 8 und eine zweite Endplatte 10 auf und ist in einem Gehäuse 12 angeordnet, das einen Fluideinlass 14 und einen Fluidauslass 16 aufweist. Das zu reinigende Fluid (nicht gezeigt), hier die zu reinigende Luft, strömt in Richtung eines ersten Pfeils 18 auf ein Filtermedium 20 des Filterelements 6, das ein Mittel- oder Stützrohr 22 des Filterelements 6 mehrfach gefaltet umgibt. Das Filtermedium 20 liegt dabei unmittelbar an der Außenseite des Stützrohrs 22 an.

Das Stützrohr 22 ist einteilig aus Kunststoff ausgebildet und weist eine Vielzahl von Querstegen und Längsstegen auf, die eine Vielzahl von Durchgangsausnehmungen begrenzen. Aus Gründen der Übersichtlichkeit sind lediglich eine erste Querstrebe 24, eine zweite Querstrebe 26, ein erster Längssteg 28 und ein zweiter Längssteg 30 mit einem Bezugszeichen versehen. Die Querstege 24, 26 definieren zusammen mit den Längsstegen 28, 30 eine erste Durchgangsausnehmung 32.

Das durch das Filtermedium 20 gereinigte Fluid strömt von außen durch die Durchgangsausnehmungen, beispielsweise die erste Durchgangsausnehmung 32, in das Stützrohr 22 hinein, von wo aus das Fluid in Richtung eines zweiten Pfeils 34 axial aus dem Stützrohr 22 und weiter in Richtung eines dritten Pfeils 36 aus dem Gehäuse 12 herausströmt.

Zwischen dem Stützrohr 22 und dem Fluidauslass 16 ist ein Fluidsensor 38 in Form eines Fluidmassensensors, hier eines Lufmassensensors, angeordnet. Der Fluidsensor 38 misst einen Teil des Fluidstroms. Hieraus kann die gesamte pro Zeiteinheit das Filtersystem 1 bzw. das Filterelement 6 verlassende Fluidmenge bestimmt werden. Die Messung des Fluidsensors 38 erfolgt jedoch nur dann mit hinreichender Präzision, wenn keine oder eine nur geringe Wirbelbildung im Fluidstrom vorliegt. Eine solche Wirbelbildung oder andere Unregelmäßigkeiten in der Fluidströmung treten besonders dann auf, wenn das Filterelement 6 in unterschiedlich gedrehter Stellung in dem Gehäuse 12 angeordnet ist.

Die Erfinder haben nun herausgefunden, dass das Ausmaß der Wirbelbildung bzw. die Homogenität der Fluidströmung signifikant von der Form der Längsstege, beispielsweise der Längsstege 28, 30 abhängig ist.

**Fig. 2** zeigt eine geschnittene Draufsicht auf ein Filtersystem 1a gemäß dem Stand der Technik, das im Wesentlichen wie das Filtersystem 1 gemäß Fig. 1 aufgebaut ist, allerdings ein nachteiliges Stützrohr 22a aufweist. Das Stützrohr 22a weist mehrere Längsstege auf, von denen aus Gründen der Übersichtlichkeit lediglich ein erster Längssteg 28a und ein zweiter Längssteg 30a mit einem Bezugszeichen versehen sind. Die Längsstege 28a und 30a weisen einen unterschiedlichen Querschnitt auf. Insbesondere unterscheiden sich die Längsstege 28a, 30a hinsichtlich ihrer Form und dadurch ihres Strömungswiderstandes. Hierdurch kann es zu einer unterschiedlich starken radialer Einströmung des Fluids (nicht gezeigt) ins Zentrum des Stützrohrs 22a kommen.

**Fig. 3** zeigt demgegenüber eine geschnittene Draufsicht auf das erfindungsgemäße Filtersystem 1 gemäß Fig. 1. Aus Fig. 3 wird ersichtlich, dass alle Längsstege, beispielsweise die Längsstege 28, 30, den gleichen viereckigen Querschnitt aufweisen. Weiterhin sind alle Längsstege zum Zentrum 40 des Stützrohrs 22 hin ausgerichtet. Die Längsstege sind dabei rotationssymmetrisch zum Zentrum 40 angeordnet.

Durch das Zentrum 40 verläuft die mittige Längsachse des Stützrohrs 22. Alle Längsstege, beispielsweise die Längsstege 28, 30, sind symmetrisch zu ihrer in Längsrichtung des Stützrohrs 22 verlaufenden, die mittige Längsachse des Stützrohrs 22 schneidenden Mittenebene ausgebildet. Aus Gründen der Übersichtlichkeit sind in Fig. 3 lediglich eine erste Mittenebene 42 des ersten Längssteges 28 und eine zweite Mittenebene 44 des zweiten Längssteges 30 mit einem Bezugszeichen versehen. Die erfindungsgemäße Anordnung der Längsstege erzeugt einen gleich hohen Widerstand beim radialen Einströmen des Fluids (nicht gezeigt) in das Stützrohr 22.

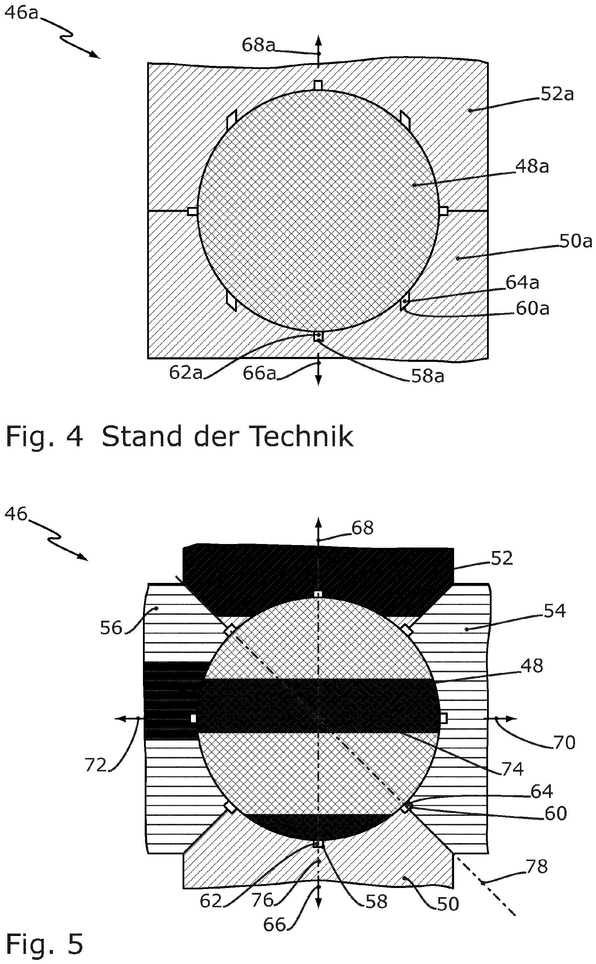

**Fig. 4** zeigt eine geschnittene Darstellung einer Vorrichtung 46a gemäß dem Stand der Technik zur Spritzgussherstellung des Stützrohrs 22a aus Fig. 2.

Die Vorrichtung 46a umfasst einen einteiligen, im Querschnitt kreisförmigen Dorn 48a, an dessen radiale Außenseite ein erstes Außenelement 50a und ein zweites Außenelement 52a angepresst sind. Die Außenelemente 50a, 52a weisen Aussparungen auf, von denen aus Gründen der Übersichtlichkeit lediglich eine erste Aussparung 58a und eine zweite Aussparung 60a mit einem Bezugszeichen versehen sind. Hierdurch werden zwischen dem Dorn 48a und den Außenelementen 50a, 52a Leerräume ausgebildet, von denen ein erster Leerraum 62a und ein zweiter Leerraum 64a mit einem Bezugszeichen versehen sind. In die Leerräume, beispielsweise die Leerräume 62a, 64a, wird Kunststoff (nicht gezeigt) eingespritzt und ausgehärtet. Anschließend wird das erste Außenelement 50a in Richtung eines vierten Pfeils 66a und das zweite Außenelement 52a in Richtung eines fünften Pfeils 68a von dem Dorn 48a getrennt. Die Leerräume, beispielsweise die Leerräume 62a, 64a, sind dabei so ausgebildet, dass die Aussparungen, beispielsweise die Aussparungen 58a, 60a, keinen Hintergriff aufweisen, sodass die Außenelemente 50a, 52a in Richtung der Pfeile 66a, 68a von dem Dorn 48a wegbewegt werden können, ohne das neu hergestellte Stützrohr 22a (siehe Fig. 2) zu zerstören.

**Fig. 5** zeigt demgegenüber eine erfindungsgemäße Vorrichtung 46 zur Herstellung des erfindungsgemäßen Stützrohrs 22 gemäß Fig. 3. Die Vorrichtung 46 weist einen einteiligen, zylinderförmigen, das heißt im Querschnitt kreisförmigen Dorn 48 auf, an dessen radialer Außenseite ein erstes Außenelement 50, ein zweites Außenelement 52, ein drittes Außenelement 54 und ein viertes Außenelement 56 angepresst ist. Die Außenelemente 50, 52, 54, 56 weisen Aussparungen auf, von denen aus Gründen der Übersichtlichkeit nur eine erste Aussparung 58 und eine zweite Aussparung 60 mit einem Bezugszeichen versehen sind. Durch die Aussparungen, beispielsweise die Aussparungen 58, 60, werden zwischen dem Dorn 48 und den Außenelementen 50, 52, 54, 56 Leerräume ausgebildet, von denen ein erster Leerraum 62 und ein zweiter Leerraum 64 mit einem Bezugszeichen versehen sind. In die Leerräume, beispielsweise die Leerräume 62, 64, wird Kunststoff (nicht gezeigt) eingespritzt und ausgehärtet, um das Stützrohr 22 (siehe Fig. 3) mit seinen Längsstegen, beispielsweise den Längsstegen 28, 30 (siehe Fig. 3), herzustellen. Die Aussparungen, beispielsweise die Aussparungen 58, 60, können alternativ oder zusätzlich zu ihrer Ausbildung an den Außenelementen 50, 52, 54, 56 an dem Dorn 48 ausgebildet sein.

Nach dem Aushärten des Kunststoffs wird das erste Außenelement 50 in Richtung eines sechsten Pfeils 66, das zweite Außenelement 52 in Richtung eines siebten Pfeils 68, das dritte Außenelement 54 in Richtung eines achten Pfeils 70 und das vierte Außenelement 56 in Richtung eines neunten Pfeils 72 radial vom Zentrum 74 des Dorns 48 weg bewegt. Die Leerräume, beispielsweise die Leerräume 62, 64, sind symmetrisch zu ihrer in Längsrichtung des Dorns 48 verlaufenden, die mittige Längsachse des Dorns 48 schneidenden Mittenebene ausgebildet. In Fig. 5 sind beispielhaft eine erste Mittenebene 76 des ersten Leerraums 62 und eine zweite Mittenebene 78 des zweiten Leerraums 64 dargestellt.

Die Leerräume, beispielsweise die Leerräume 62, 64, sind rotationssymmetrisch zum Zentrum 74 des Dorns 48 angeordnet und weisen alle den gleichen viereckigen Querschnitt auf.

In allen Bereichen zwischen zwei Außenelementen 50, 52, 54, 56 und dem Dorn 48 ist jeweils ein Leerraum vorgesehen. Beispielsweise ist im Bereich zwischen dem ersten Außenelement 50 und dem dritten Außenelement 54 der zweite Leerraum 64 vorgesehen. Hierdurch kann die Vorrichtung 46 mit einer minimalen Anzahl an Außenelementen ausgebildet werden, ohne das Stützrohr 22 (siehe Fig. 3) beim Ausformen zu zerstören.

Zusammenfassend betrifft die Erfindung somit eine Vorrichtung zur Herstellung eines Stützrohres aus Kunststoff für ein Filterelement eines Filtersystems. Die Längsstege des Stützrohres sind symmetrisch zum Zentrum des Stützrohres hin ausgebildet und weisen vorzugsweise denselben, insbesondere viereckigen, Querschnitt auf. Das Stützrohr ist dabei vorzugsweise insgesamt im Wesentlichen zylinderförmig ausgebildet. Das Stützrohr kann durch Ausführung eines erfindungsgemäßen Verfahrens in einer erfindungsgemäßen Vorrichtung im Spritzgussverfahren hergestellt werden, die einen, insbesondere zylinderförmigen, Dorn aufweist, an den Außenelemente mit Ausbuchtungen anpressbar sind. Zwischen dem Dorn und den Außenelementen sind Leerräume für die Längsstege vorgesehen. Die Leerräume sind symmetrisch zum Zentrum des Dorns ausgerichtet. Die Außenelemente sind dabei so um den Dorn angeordnet, dass sie ohne Hintergriffe an den Leerräumen auszubilden von dem Dorn abnehmbar sind, sodass das mit der Vorrichtung produzierte Stützrohr beim Entformen nicht beschädigt wird. Durch die Erfindung kann auf konstruktiv einfache und kostengünstige Art und Weise ein Stützrohr geschaffen werden, in das ein Fluid unter minimaler Wirbelbildung einsaugbar bzw. einpressbar ist. Dies ist für eine bei vielen Anwendungen erforderliche messtechnische Erfassung der aus dem Filtersystem bzw. dem Filterelement herausgeführten Fluidströmung von Vorteil.

## Patentansprüche

1. Stützrohr (22) aus Kunststoff für ein Filterelement (6), mit mehreren von einer Vielzahl von Querstegen und Längsstegen begrenzten Durchgangsausnehmungen (32), wobei das Stützrohr (22) einteilig ausgebildet ist und die Durchgangsausnehmungen (32) durch mehr als vier, im Querschnitt mehreckige, zumindest abschnittsweise in Längsrichtung des Stützrohrs (22) ausgebildete Längsstege (28, 30) begrenzt werden, **dadurch gekennzeichnet, dass** die Längsstege (28, 30) jeweils symmetrisch zu ihrer in Längsrichtung des Stützrohrs (22) verlaufenden, die mittige Längsachse des Stützrohrs (22) schneidenden Mittenebene (42, 44) ausgebildet sind.

2. Stützrohr nach Anspruch 1, **dadurch gekennzeichnet, dass** das Stützrohr (22) radialsymmetrisch zu seiner mittigen Längsachse ausgebildet ist.

3. Stützrohr nach Anspruch 1 oder 2, **dadurch gekennzeichnet, dass** die Längsstege (28, 30) rotationssymmetrisch zur mittigen Längsachse des Stützrohrs (22) ausgebildet sind.

4. Stützrohr nach einem der vorhergehenden Ansprüche, **dadurch gekennzeichnet, dass** alle Längsstege (28, 30) den gleichen, insbesondere viereckigen, Querschnitt aufweisen.

5. Filterelement (6) mit einem Stützrohr (22) nach einem der vorhergehenden Ansprüche und mit einem, vorzugsweise ringförmigen, Filtermedium (20), das an den Längsstegen (28, 30) des Stützrohrs (22) außenseitig anliegt und in radialer Richtung abgestützt ist.

6. Filtersystem (1) umfassend ein Gehäuse (12) und ein in dem Gehäuse (12) angeordnetes Filterelement nach Anspruch 5, wobei das Gehäuse (12) einen Fluideinlass (14) aufweist, der fluidisch mit der Außenseite des Filtermediums (20) verbunden ist, wobei das Gehäuse (12) einen Fluidauslass (16) aufweist, der fluidisch mit der Innenseite des Stützrohrs (22) verbunden ist, und wobei zwischen dem Stützrohr (22) und dem Fluidauslass (16) ein Fluidsensor (38), insbesondere ein Fluidmassensensor, zur Messung des Fluidstroms aus dem Gehäuse (12) angeordnet ist.

7. Vorrichtung (46) zur Spritzgussherstellung eines einteiligen Stützrohrs (22) aus Kunststoff gemäß einem der Ansprüche 1 bis 4, wobei die Vorrichtung (46) einen, insbesondere im Wesentlichen zylinderförmigen, Dorn (48) aufweist, dessen Außenseite die Innenseite des Stützrohrs (22) bei dessen Herstellung begrenzt, **dadurch gekennzeichnet, dass** die Vorrichtung (46) zumindest drei um den Dorn (48) anordenbare Außenelemente (50, 52, 54, 56) aufweist und Kunststoff in zur Ausbildung der Längsstege (28, 30) des Stützrohrs (22) vorgesehene Leerräume (62, 64) der Vorrichtung (46) zwischen den Dorn (48) und die Außenelemente (50, 52, 54, 56) einbringbar ist, wobei die Leerräume (62, 64) symmetrisch zu ihrer in Längsrichtung des Dorns (48) verlaufenden, die mittige Längsachse des Dorns (48) schneidenden Mittenebene (76, 78) ausgebildet sind.

8. Vorrichtung nach Anspruch 7, **dadurch gekennzeichnet, dass** in zumindest einem Bereich zwischen zwei Außenelementen (50, 52, 54, 56) und dem Dorn (48), insbesondere in allen Bereichen zwischen zwei Außenelementen (50, 52, 54, 56) und dem Dorn (48), ein Leerraum (62, 64) für einen Längssteg (28, 30) vorgesehen ist.

9. Vorrichtung nach Anspruch 8, **dadurch gekennzeichnet, dass** die Vorrichtung (46) zur Ausbildung eines Stützrohrs (22) mit mehr als vier Leerräumen (62, 64) ausgebildet ist, wobei für s Längsstege (28, 30) a=s/2 Außenelemente (50, 52, 54, 56) an der Vorrichtung (46) vorgesehen sind und a eine aufgerundete ganze Zahl ist.

10. Verfahren zur Spritzgussherstellung eines einteiligen Stützrohrs (22) aus Kunststoff nach einem der Ansprüche 1 bis 4, aufweisend die folgenden Schritte:
a) Bereitstellen eines Dorns (48);
b) Anpressen von zumindest drei Außenelementen (50, 52, 54, 56) an die Außenseite des Dorns (48),
wobei zumindest abschnittsweise in Längsrichtung des Dorns (48) verlaufende Leerräume (62, 64) zwischen den Außenelementen (50, 52, 54, 56) und dem Dorn (48) entstehen, die jeweils symmetrisch zu ihrer in Längsrichtung des Dorns (48) verlaufenden, die mittige Längsachse des Dorns (48) schneidenden Mittenebene (76, 78) ausgebildet sind;
c) Einbringen von Kunststoff in die Leerräume (62, 64);
d) Aushärten des Kunststoffs;
e) Beabstanden der Außenelemente (50, 52, 54, 56) von dem Dorn (48) entlang der die mittige Längsachse des Dorns (48) schneidenden Mittenebenen (76, 78) der Leerräume (62, 64).

## Claims

1. Support tube (22) made of synthetic material for a filter element (6), with several passage recesses (32) defined by a plurality of transversal webs and longitudinal webs, wherein the support tube (22) is designed in one piece and the passage recesses (32) are defined, at least sectionwise in the longitudinal direction of the support tube (22), by more than four longitudinal webs (28, 30) having a polygonal cross-section, **characterized in that** the longitudinal webs (28, 30) are designed each symmetrically to their central plane (42, 44) extending in longitudinal direction of the support tube (22) and intersecting the central longitudinal axis of the support tube (22).

2. Support tube according to claim 1, **characterized in that** the support tube (22) is designed radially symmetric to its central longitudinal axis.

3. Support tube according to claim 1 or 2, **characterized in that** the support longitudinal webs (28, 30) are designed rotationally symmetric to the central longitudinal axis of the support tube (22).

4. Support tube according to one of the above claims, **characterized in that** all longitudinal webs (28, 30) feature the same, in particular quadrangular, cross-section.

5. Filter element (6) with a support tube (22) according to one of the above claims and with a preferably annular filter medium (20) contacting the longitudinal webs (28, 30) of the support tube (22) on the exterior side and being supported in radial direction.

6. Filter system (1) comprising a housing (12) and a filter element disposed in the housing (12) according to claim 5, wherein the housing (12) features a fluid inlet (14) fluidically connected to the exterior side of the filter medium (20), wherein the housing (12) features a fluid outlet (16) fluidically connected to the interior side of the support tube (22), and wherein a fluid sensor (38) is disposed between the support tube (22) and the fluid outlet (16), in particular a fluid mass sensor, for measuring the fluid flow from the housing (12).

7. Apparatus (46) for the injection molding of a one-piece support tube (22) made of synthetic material according to one of the claims 1 to 4, wherein the apparatus (46) features a mandrel (48) in particular substantially cylindrical, the exterior side of which limits the interior side of the support tube (22) during its manufacturing, **characterized in that** the apparatus (46) features at least three exterior elements (50, 52, 54, 56) that can be disposed around the mandrel (48) and that synthetic material can be introduced into empty spaces (62, 64) of the apparatus (46) between the mandrel (48) and the exterior elements (50, 52, 54, 56) provided for forming the longitudinal webs (28, 30) of the support tube (22), wherein the empty space (62, 64) are designed symmetrically to their central plane (76, 78) extending in longitudinal direction of the mandrel (48) and intersecting the central longitudinal axis of the mandrel (48).

8. Apparatus according to claim 7, **characterized in that** in at least one area between two exterior elements (50, 52, 54, 56) and the mandrel (48), in particular in all areas between two exterior elements (50, 52, 54, 56) and the mandrel (48), an empty space (62, 64) is provided for a longitudinal web (28, 30).

9. Apparatus according to claim 8, **characterized in that** the apparatus (46) is designed with more than four empty spaces (62, 64) for forming a support tube (22), wherein for s longitudinal webs (28, 30) a=s/2 exterior elements (50, 52, 54, 56) are provided at the apparatus (46) and a is a rounded up integer.

10. Method for the injection molding of a one-piece support tube (22) made of synthetic material according to one of the claims 1 to 4, featuring the following steps:
a) Providing a mandrel (48);
b) Pressing at least three exterior elements (50, 52, 54, 56) against the exterior side of the mandrel (46),
wherein at least sectionwise empty spaces (62, 64) between the exterior elements (50, 52, 54, 56) and the mandrel (48) are formed in longitudinal direction of the mandrel (48) which are each designed symmetrically to their central plane (76, 78) extending in longitudinal direction of the mandrel (48) and intersecting the central longitudinal axis of the mandrel (22);
c) Introducing synthetic material into the empty spaces (62, 64);
d) Hardening the synthetic material;
e) Spacing the exterior elements (50, 52, 54, 56) apart from the mandrel (48) along the central planes (76, 78) of the empty spaces (62, 64), intersecting the central longitudinal axis of the mandrel (46).

## Revendications

1. Tube de support (22) en matière plastique pour un élément filtrant (6), avec plusieurs évidements traversants (32) limités par une pluralité de nervures transversales et de nervures longitudinales, dans lequel le tube de support (22) est réalisé en un seul bloc et les évidements traversants (32) étant limités, au moins sur certaines sections dans le sens longitudinal du tube de support (22), par plus de quatre nervures longitudinales (28, 30) à sections polygonales, **caractérisé en ce que** les nervures longitudinales (28, 30) sont réalisées respectivement symétriquement à leur plan central (76, 78) s'étendant en sens longitudinal du tube de support (22) et coupant l'axe longitudinal central du tube de support (22).

2. Tube de support selon la revendication 1, **caractérisé en ce que** le tube de support (22) est réalisé à symétrie radiale à son axe longitudinal central.

3. Tube de support selon la revendication 1 ou 2, **caractérisé en ce que** les nervures longitudinales (28, 30) sont réalisées à symétrie de révolution à l'axe longitudinal central du tube de support (22).

4. Tube de support selon l'une des revendications précédentes, **caractérisé en ce que** toutes les nervures longitudinales (28, 30) présentent la même section, notamment quadrangulaire.

5. Élément filtrant (6) avec un tube de support (22) selon l'une des revendications précédentes et avec un milieu filtrant (20), de préférence annulaire, qui contacte les nervures longitudinales (28, 30) du tube de support (22) à l'extérieur et qui est supporté en direction radiale.

6. Système de filtre (1) comprenant un boîtier (12) et un élément filtrant disposé dans le boîtier (12) selon la revendication 5, dans lequel le boîtier (12) présente une entrée de fluide (14) reliée fluidiquement avec la face externe du milieu filtrant (20), dans lequel le boîtier (12) présente une sortie de fluide (16) reliée fluidiquement avec la face interne du tube de support (22) et dans lequel un détecteur de fluide (38) est disposé entre le tube de support (22) et la sortie de fluide (16), notamment un détecteur de la masse de fluide, pour mesurer le flux de fluides sortant du boîtier (12).

7. Dispositif (46) pour le moulage par injection d'un tube de support en un seul bloc (22) en matière plastique selon l'une des revendications 1 à 4, dans lequel le dispositif (46) présente une broche (48) notamment essentiellement cylindrique, dont la face externe limite la face interne du tube de support (22) lors de sa fabrication, **caractérisé en ce que** le dispositif (46) présente au moins trois éléments externes (50, 52, 54, 56) pouvant être disposés autour de la broche (48) et que de la matière plastique peut être introduite dans des cavités (62, 64) du dispositif (46) entre la broche (48) et les éléments externes (50, 52, 54, 56) prévues pour former les nervures longitudinales (28, 30) du tube de support (22), dans lequel les cavités (62, 64) sont réalisées symétriquement à leur plan central (76, 78) s'étendant en sens longitudinal de la broche (48) et coupant l'axe longitudinal central de la broche (48).

8. Dispositif selon la revendication 7, **caractérisé en ce que** dans au moins une zone entre deux éléments externes (50, 52, 54, 56) et la broche (48), notamment dans toutes les zones entre deux éléments externes (50, 52, 54, 56) et la broche (48), une cavité (62, 64) est prévue pour une nervure longitudinale (28, 30).

9. Dispositif selon la revendication 8, **caractérisé en ce que** le dispositif (46) est réalisé avec plus de quatre cavités (62, 64) pour former un tube de support (22), dans lequel pour s nervures longitudinales (28, 30) a=s/2 éléments externes (50, 52, 54, 56) sont prévus sur le dispositif (46) et que a est un nombre entier arrondi vers le haut.

10. Procédé pour le moulage par injection d'un tube de support en un seul bloc (22) en matière plastique selon l'une des revendications 1 à 4, présentant les étapes suivantes :
a) Mise à disposition d'une broche (48);
b) Pressage d'au moins trois éléments externes (50, 52, 54, 56) contre la face externe de la broche (48),
dans lequel au moins sur certaines sections des cavités (62, 64) s'étendant dans le sens longitudinal de la broche (48) sont formées entre les éléments externes (50, 52, 54, 56) et la broche (48) qui sont réalisées respectivement symétriquement à leur plan central (76, 78) s'étendant en sens longitudinal de la broche (48) et coupant l'axe longitudinal central de la broche (48);
c) Introduction d'une matière plastique dans les cavités (62, 64) ;
d) Durcissement de la matière plastique;
e) Espacement des éléments externes (50, 52, 54, 56) de la broche (48) le long des plans centraux (76, 78) des cavités (62, 64) coupant l'axe longitudinal centrale de la broche (48).
